# EUROPEAN PATENT SPECIFICATION

(11) **EP 2 348 817 B1**
(45) Date of publication and mention of the grant of the patent: **28.12.2016**
(21) Application number: 09753171.9
(22) Date of filing: 23.10.2009
(51) Int. Cl.: A01J 5/017

(54) **MILKING APPARATUS AND PROCESS**
MELKVORRICHTUNG UND -VERFAHREN
DISPOSITIF ET PROCÉDÉ DE TRAITE

(30) Priority: 25.10.2008 GB 0819604
(43) Date of publication of application: 03.08.2011
(73) Proprietor: Green Source Automation LLC, Ceres, CA 95307 (US)
(72) Inventor: DAUBNER, Anton, Ceres, CA 95307 (US); PEACOCK, Andrew Mark, Musselburgh EH21 6JW (GB)
(74) Representative: Cooper, John
(86) International application number: PCT/GB2009/002548
(87) International publication number: WO 2010/046669

(56) References cited:
- EP-A1- 0 194 729
- EP-A1- 1 537 775
- WO-A1-00/11936
- WO-A1-98/07311
- WO-A1-98/35547
- US-A1- 2007 215 052

## Description

### Field of the invention

The present invention relates to a milking apparatus and a milking process.

### Background to the invention

Robotic milking apparatus is known. Such known apparatus is operative to attach teat cups to the teats of a cow that is to be milked by means of a robot arm or the like. WO 2005/015985 describes a teat locating sensor that is operative to determine locations of the teats of a cow that is to be milked. A robot arm of the robotic milking apparatus is operative to move to.the teats and to attach the teat cups to the teats in dependence on the thus determined locations of the teats.

Cows vary in size and shape and are liable to move when in a milking parlour. Hence, it can be problematic to move an arm of robotic milking apparatus to a cow's udder so that the teat locating sensor of WO 2005/015985 can be brought into operation. Approaches to moving a robotic arm to a cow's udder are known. For example, WO 00/41559 describes a method of determining the general position of a cow's udder by measuring the cow in advance of the milking process and assigning the cow to one of a predetermined number of classes. The robotic milking apparatus of WO 00/41559 is operative in dependence on the assigned classification to move to the udder and to attach teat cups to the teats of the udder.

The present inventor has appreciated shortcomings of known approaches to providing for movement of a robotic milking arm to an udder of an animal.

Therefore it is an object for the present invention to provide improved milking apparatus having a robot arm that is operative to move towards an udder of an animal.

It is a further object for the present invention to provide an improved milking process in which a robot arm of milking apparatus moves towards an udder of an animal.

WO 98/07311 discloses a technique for determining the position of an animal part to be subjected to an animal-related action such as determining the position of an animal's udder for milking. The technique includes determining the position of the animal part at a first location which includes housing for the animal and performing the animal related action at a second location which is at a distance from the first location. The technique includes transferring coordinates of the animal part position determined at the first location to performing means at the second location.

### Statement of invention

Features and aspects of the invention are defined in the claims.

The present invention has been devised in the light of the inventor's appreciation of the shortcomings of the above mentioned known approaches. Thus, according to a first aspect of the present invention there is provided milking apparatus comprising:
sensor apparatus arranged, in use of the milking apparatus, to determine a location in a lateral direction with respect to an animal of at least
one anatomical feature of the animal, the at least one anatomical feature being other than an udder of the animal, the sensor apparatus comprising image capture apparatus that is arranged to acquire at least one image of at least part of the animal; and
   a robot arm located, in use of the milking apparatus, either behind or in front of the animal, the robot arm being arranged to move towards the udder in dependence upon the determined location of the anatomical feature,
   the milking apparatus comprises processing apparatus that is arranged to process the at least one image acquired by the image capture apparatus, characterized in that the processing apparatus is arranged to define a searching region in the acquired image and to carry out a search within the searching region for electronic data corresponding to a part of the animal, and wherein
the processing apparatus is arranged to carry out a search from substantially a centre of the searching region towards a periphery of the searching region.

The apparatus of WO 00/41559 comprises a robot arm that is located to one side of an animal in the milking apparatus. Thus, the reach of the robot arm of WO 00/41559 towards the udder is unimpeded by the anatomy of the animal.

The present inventor has appreciated that if the
robot arm of WO 00/41559 were to be located either behind the animal,
e.g. as may be desirable in a rotary milking parlour, or in front of the animal, the classification approach of WO 00/41559 may be incapable of taking movement of the animal with respect the milking apparatus or movement of one anatomical feature of the animal in relation to another
into account in providing for unimpeded movement of the robot arm to the udder. The present invention addresses these problems by determining a location in a lateral direction of an anatomical feature of the animal other than the udder and moving the robot arm independence on the
determined location. The at least one anatomical feature may, for example, be at least one leg of the animal. The image capture apparatus is arranged to acquire at least one image of at least part of the animal, e.g. an image of the rear and the hind legs of the animal.

Thus, the sensor apparatus may be arranged to determine the location of at least one leg, such as at least one hind leg, of the animal in a lateral direction. More specifically, the location of at least one leg in relation to one of the sensor apparatus and the robot arm may be determined. Thus, movement of the robot arm may take account of movement of the animal
in relation to the milking apparatus. Where the location in relation to the sensor apparatus is determined,a location of the robot arm in relation to the sensor apparatus may be determined, whereby the location of the robot arm in relation to the at least one leg may be determined. In use, determining the location of at least one leg may allow for the robot arm to pass the at least one leg unimpeded and towards the udder.

Alternatively or in addition, the sensor apparatus may be arranged to determine a separation between two legs, such as the hind legs, of the animal. In use, determination of the separation between the legs may allow, for example, for a determination as to whether or not the reach of
the robot arm is impeded by the legs or for a determination as to how much room there is for passage of the robot arm between the legs.

Alternatively or in addition, the sensor apparatus may be further arranged to determine a height of the udder of an animal in relation to one of the sensor apparatus and the robot arm.

Alternatively or in addition, the sensor apparatus may be further arranged to determine a distance between the udder of an animal and one of the sensor apparatus and the robot arm.

Alternatively or in addition, the sensor apparatus may be arranged to determine the location of the at least one anatomical feature in relation to the sensor apparatus.

Alternatively or in addition, the robot arm may be arranged to move in dependence on a location of the robot arm in relation to the sensor apparatus.

The robot arm may be configured such that it is located behind or in front of the animal. The robot arm may be configured, for example, by having dimensions such that it can pass between legs of the animal towards the udder or by having a reach sufficient that a distal portion of the robot arm can reach the udder.

Alternatively or in addition, the sensor apparatus may be arranged to provide an electronic signal corresponding to the determined location of the anatomical feature and the robot arm may be arranged to move in dependence on the electrical signal provided by the sensor apparatus.

Alternatively or in addition, the sensor apparatus may be arranged to determine the location of the anatomical feature without touching the animal.

More specifically, the image capture apparatus may be arranged to
acquire an image in at least two dimensions. Thus, for example, the image capture apparatus may comprise a two-dimension visual or thermal camera.

Alternatively or in addition, the image capture apparatus may be arranged to acquire an image in three dimensions. Thus, for example, the image capture apparatus may comprise a laser triangulation sensor, a laser scanner or a time of flight camera.

The milking apparatus may comprise processing apparatus that is arranged to process electronic signals from the sensor apparatus. The processing apparatus may comprise a microprocessor that forms part, for example, of an embedded
microprocessor arrangement.

More specifically, where the sensor apparatus comprises image capture apparatus, the processing apparatus is be arranged to process at least one image acquired by the image capture apparatus.

More specifically, the processing apparatus is arranged to define at least one region in an acquired image.

More specifically, the processing apparatus is arranged to define initial and searching regions in the acquired image.

More specifically, the initial region may be smaller than the searching region.

Alternatively or in addition, the processing apparatus may be arranged to define an initial region in an acquired image, the initial region lacking electronic data, e.g. pixels, corresponding to a part of the animal. The initial region may be at or towards a centre of the image. If an initial region lacking electronic data corresponding to a part of the animal cannot be defined, the processing apparatus may be arranged to cease operation of the milking apparatus. For example, if an animal is lying down no initial region lacking electronic data corresponding to a part of the animal may be defined and thus the milking procedure is discontinued.

Alternatively or in addition, the processing apparatus may be arranged to determine whether or not the initial region is clear. If the initial region is not clear the processing apparatus may be arranged to cease operation of the milking apparatus. The lack of an initial region that is clear may, for example, indicate the presence of a milking cluster that is either properly or improperly attached to the teats, whereby the teats are not yet ready for disinfection.

The processing apparatus may be arranged to define a searching region in the acquired image and to carry out a search within the searching region for electronic data corresponding to a part of an animal. If a search of the searching region determines no electronic data corresponding to a part of an animal, the processing apparatus may be arranged to cease operation of the milking apparatus. For example, if there is no animal present no electronic data corresponding to a part of an animal may be determined and thus the milking procedure is discontinued.

More specifically, the processing apparatus may be arranged to carry out a search from a first part of the searching region towards a second part of the searching region, the first part corresponding to a lower part of a view of the image capture apparatus and the second part corresponding to an upper part of the view of the image capture apparatus. Following this approach may reduce the risk, for example, that the teats of an animal are confused for legs of the animal.

More specifically, the processing apparatus may be aranged to determine a representation of at least part of at least one leg in the searching region as the search progresses from the first to the second part.

More specifically, the processing apparatus may be arranged to determine a representation of at least part of an udder in the searching region after determination of the representation of at least part of at leas tone leg as the search progresses further from the first to the second part.

Determination of a feature, such as a part of a leg or an udder, may be achieved by the processing apparatus by means of a thresholding process. More specifically, the thresholding process may comprise comparing a change in amplitude of electronic data, e.g. pixels, from one part of the searching region to another with a threshold value and if the change in amplitude is greater than the threshold value determining that a feature is represented by one of the first and second parts of the searching region.

The processing apparatus may be arranged to carry out a search from substantially a centre of the searching region towards a periphery of the searching region.

Alternatively or in addition, the processing apparatus may be arranged to filter an acquired image. Filtering may, for example, be used to remove noise present in an acquired image.

More specifically, electronic data, e.g. pixels, in at least a part of the acquired image may be averaged.

Alternatively or in addition, electronic data in at least a part of each of a plurality of acquired images may be averaged from acquired image to acquired image.

Alternatively or in addition, electronic data in at least a part of the acquired image may be filtered using a median filter. A median filter may be used to remove or at least attenuate salt and pepper noise.

Alternatively or in addition, the processing apparatus may be arranged to pre-process an acquired image.

More specifically, at least one portion of the acquired image smaller than a predetermined size may be removed from the acquired image.

More specifically and where image capture apparatus is arranged to acquire the image in three dimensions, the processing apparatus may be arranged to determine objects between spaced apart distances from the image capture apparatus. The processing apparatus may be further arranged to remove determined objects smaller than a predetermined size, e.g. 40 pels.

The milking apparatus may further comprise at least one stall configured to accommodate an animal and to maintain the animal in a predetermined orientation in relation to the stall, at least one of the robot arm and the sensor apparatus being disposed in relation to the stall such that the at least one of the robot arm and the sensor apparatus is either behind or in front of the animal.

The robot arm may be further arranged to perform at least one of: pre-milking teat disinfection; pre-milking teat cleaning; teat cup attachment; and post-milking teat disinfection.

The milking apparatus may further comprise a teat locating sensor. The
teat locating sensor may comprise an image capture apparatus that is arranged to determine the location of at least one teat on the basis of an acquired image. The teat locating sensor may be of a kind as described in WO 2005/015985. Thus, the robot arm of the milking apparatus may be arranged to perform an action, such as teat cup attachment, in
dependence upon operation of the image capture apparatus and after movement of the robot arm towards the udder.

The milking apparatus may comprise a rotary milking parlour. More specifically, the robot arm may be located behind an animal in a stall of the rotary milking parlour. Alternatively or in addition, the sensor apparatus may be located generally behind an animal in a stall of the rotary milking
parlour.

According to a second aspect of the present invention, there is provided a milking process comprising:
determining a location in a lateral direction with respect to an animal in a milking apparatus of an anatomical feature of the animal by means of sensor apparatus, the anatomical feature being otherthan an udder of the animal, the sensor apparatus comprising image capture apparatus that is arranged acquire at least one image of at least part of the animal,
operating a robot arm located either behind or in front of the animal such that the robot arm moves towards the udder in dependence upon the determined location of the anatomical feature,
the processing apparatus arranged to process the at least one image, acquired by the image capturing apparatus,
characterized in that the processing apparatus is arranged to define a searching region in the acquired image and
   to carry out a search within the searching region for electronic data corresponding to a part of the animal, said search comprising search from substantially a centre of the searching region towards a periphery of the searching region.

Features of the second aspect of the present invention may comprise one or more features of the first aspect of the present invention.

### Brief description of drawings

Further features and advantages of the present invention will become apparent from the following specific description, which is given by way of example only and with reference to the accompanying drawings, in which:
Figure 1 is representation of a milking apparatus according to the present invention;
Figure 2 is a detailed view of a stall of the milking apparatus shown in Figure 1;
Figure 3 is a view as seen by the camera of the milking apparatus of Figures 1 and 2; and
Figure 4 is a flow chart representation of the operation of the apparatus shown in Figures 1 and 2.

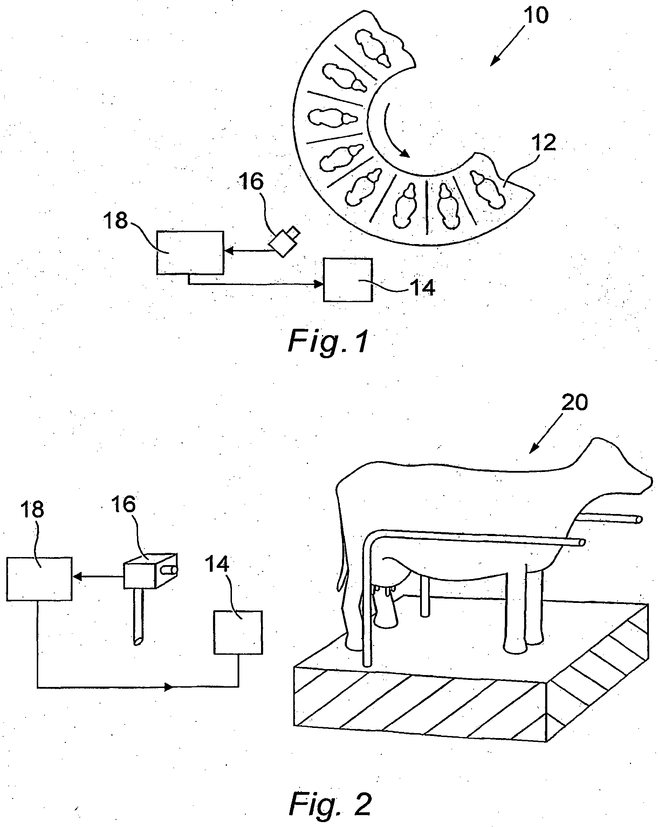

Figure 1 is a representation of a milking apparatus 10 according to the present invention. The milking apparatus comprises a rotary milking parlour 12 of conventional form and function, which rotates so as to position one or more cows held within stalls of the milking parlour at a robotic milking station (not shown). The milking apparatus of Figure 1 also comprises a robot teat disinfection apparatus 14 of conventional form and function except as described herein. The robot teat disinfection apparatus is operative after milking is complete to disinfect a cow's teats. The robot teat disinfection apparatus 14 is shown and described for the purposes of describing the present invention. The invention is operable with apparatus other than robot teat disinfection apparatus, such as pre-milking teat disinfection and cleaning apparatus and teat cup attachment apparatus. Such apparatus comprises a robot arm of conventional form and function that bears operative apparatus, such as teat disinfection apparatus. The milking apparatus of Figure 1 also comprises a time of flight camera 16 (which constitutes image capture apparatus) that is oriented such that it has a view of a rear of a cow in a stall of the rotary milking parlour 12. The time of flight camera is a PhotonICs® PMD 1k-S 3D Time-of-Flight camera from PMDTechnologies GmbH, Am Eichenhang 50, D-57076 Siegen,

Germany. In addition, the milking apparatus also comprises processing apparatus 18 that receives images acquired by the time of flight camera 16 and processes the received images before providing control signals to the robot teat disinfection apparatus 14. The processing apparatus comprises embedded microprocessor apparatus of conventional form and function.

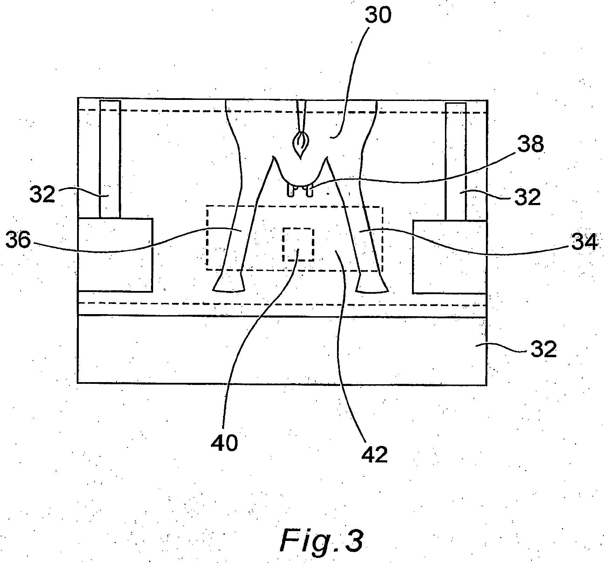

Figure 2 provides a more detailed view of apparatus of the present invention. Figure 2 shows a single stall 20 of the rotary milking parlour 12 of Figure 1, which holds a cow with the time of flight camera disposed behind the cow and oriented such that the camera has a view of the rear of the cow 30 and the surrounding structure of the stall 32, as shown in Figure 3. The processing apparatus is also shown in Figure 2. The robot teat disinfection apparatus 14 is disposed behind the cow such that a robot arm of the robot teat disinfection apparatus can extend between the cow's legs 34, 36 towards the cow's udder 38.

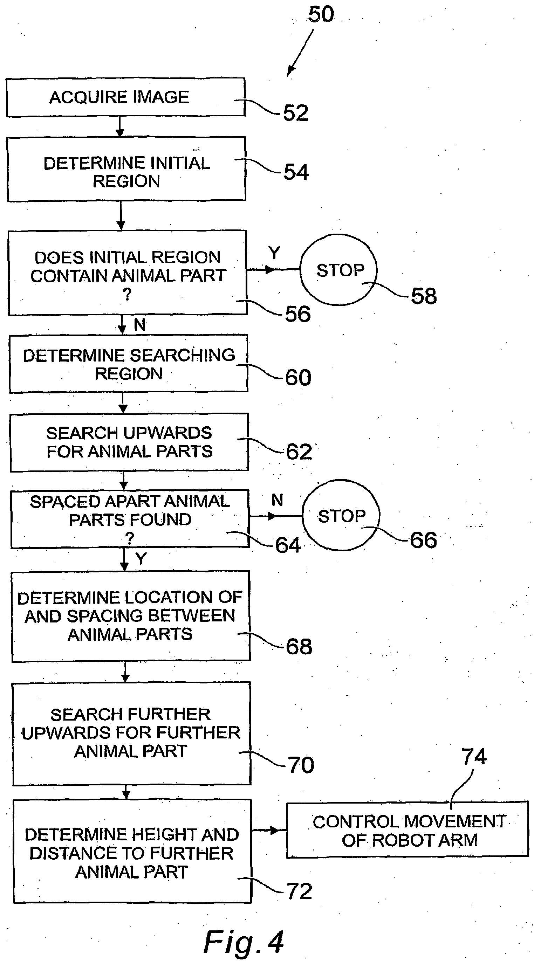

The operation of the apparatus of Figures 1 and 4 will now be described
with reference to Figure 3 and the flow chart 50 of Figure 4. An image as shown in Figure 3 is acquired 52 by means of the time of flight camera 16. An initial region 40 is defined 54 within the acquired image. The initial region has dimensions that reflect the space required for movement of the robot arm towards the udder. If no initial region lacking pixels corresponding to a part of the cow can be defined 56, the process stops 58. This is because the lack of an initial region containing no pixels corresponding to a part of the cow is indicative of a condition that would prevent extension of the robot arm towards the cow's udder, e.g. a cow lying down in the stall. Also, if no initial region that is substantially clear can be defined, the process stops. This is because the lack of an initial region that is substantially clear indicates the presence of a milking cluster that is either properly or improperly attached to the teats, whereby the teats are not yet ready for disinfection.

The processing apparatus is operative to filter pixel values of each acquired image. Averaging is over 7 x 7 pixel regions and over three successive frames. A 3 x 3 median filter is used to remove salt and pepper noise. Each image is pre-processed to detect and remove regions smaller than 40 pels. Objects within a predetermined range of distances from the image capture apparatus are determined. Then, the processing apparatus is operative to remove such determined objects where they are smaller than 40 pels.

Next a searching region 42 is defined 60. The searching region 42 is appreciably larger than the initial region 40. The searching region is of dimensions that the searching region is likely to contain at least part of each of the hind legs of the cow. A search 62 is performed on the pixels of the searching region from the centre of the rows of the searching region outwards and from the bottom row of pixels upwards row by row until pixels corresponding to spaced apart parts of the cow are determined. The search of the searching region and the determination as to whether or not the initial region contains pixels corresponding to an animal part is accomplished by means of a thresholding approach. The thresholding approach involves comparing a change in amplitude from one pixel to another or one group of pixels to another. If the change is greater than a predetermined amount this indicates the presence of pixels corresponding to an edge of a part of the cow. Thresholding is performed on the depth information in acquired images. More specifically, information contained in an image that is closer to the image capture apparatus than a predetermined value (or threshold) is removed and information contained in an image that is further away from the image capture apparatus than a predetermined value is removed. For example, the predetermined values may be set such that the front legs of the cow are removed. Where a thermal camera is used, the predetermined values are set to allow for removal of pixels that are either too hot or too cold to be an anatomical feature of a cow. Where a visual spectrum or NIR (near infrared) camera is used, groups of pixels are characterised by the distribution of their pixel values as corresponding to cow anatomy or not.

When pixels corresponding to spaced apart parts of the cow are found this indicates that the hind legs 34, 36 of the cow have been found. The distance between the spaced apart parts and the location of each of the spaced apart parts is determined 68. If the search uncovers no spaced apart parts 64 the process stops 66. This is because uncovering no spaced apart parts is indicative of a fault condition, such as the stall being empty:

The search of the searching region 42 is continued further upwards 70 until pixels corresponding to a further animal part are found. Such pixels are sought by means of the thresholding approach described above. The finding of such pixels indicates that the udder 38 has been found. The height of the further animal part (i.e. the udder) is determined along with the distance between the time of flight camera 16 and the udder 38 by means of the three-dimension imaging capability of the camera.

Having determined the location of the legs, the distance between the legs, the height of the udder and the distance to the udder, electrical signals are provided by the processing apparatus 18 to the robot teat disinfection apparatus 14 so that the robot arm moves in an appropriate direction so as to pass between the legs and at an appropriate height and for an appropriate distance such that the robot arm is positioned nearby the cow's udder.

Although not shown in the drawings appended hereto, the robot teat disinfection apparatus comprises a teat locating sensor of the kind described in WO 2005/015985. Thus and as described in detail in WO 2005/015985, having been positioned nearby the udder by means of the present invention, the robot arm of the teat disinfection apparatus is arranged to perform teat disinfection in dependence upon operation of the teat locating sensor.

## Claims

1. Milking apparatus comprising:
sensor apparatus (16) arranged, in use of the milking apparatus, to determine a location in a lateral direction with respect to an animal of at least one anatomical feature of the animal, the at least one anatomical feature being other than an udder of the animal, the sensor apparatus (16) comprising image capture apparatus (16) that is arranged to acquire at least one image of at least part of the animal; and
a robot arm located, in use of the milking apparatus, either behind or in front of the animal, the robot arm being arranged to move towards the udder in dependence upon the determined location of the anatomical feature, wherein
the milking apparatus comprises a processing apparatus (18) that is arranged to process the at least one image acquired by the image capture apparatus (16), **characterised in that** the processing apparatus (18) is arranged to define a searching region (42) in the acquired image and to carry out a search within the searching region (42) for electronic data corresponding to a part of the animal, and wherein
the processing apparatus (18) is arranged to carry out a search from substantially a centre of the searching region (42) towards a periphery of the searching region (42).

2. Apparatus according to claim 1, in which the image capture apparatus (16) is arranged to acquire an image in at least two dimensions.

3. Apparatus according to claim 1 or 2, in which the image capture apparatus (16) is arranged to acquire an image in three dimensions.

4. Apparatus according to claim 3, in which the image capture apparatus (16) comprises a time of flight camera.

5. Apparatus according to any preceding claim, in which the sensor apparatus (16) is configured such that it is arranged to determine the location of the anatomical feature without touching the animal.

6. Apparatus according to any preceding claim, in which the sensor apparatus (16) is arranged to determine the location of at least one leg of the animal in a lateral direction.

7. Apparatus according to claim 6, in which the sensor apparatus (16) is arranged to determine the location of at least one leg in relation to one of the sensor apparatus (16) and the robot arm.

8. Apparatus according to any preceding claim, in which the sensor apparatus (16) is arranged to determine a separation between two legs of the animal.

9. Apparatus according to any preceding claim, in which the sensor apparatus (16) is further arranged to determine a height of the udder of the animal in relation to the sensor apparatus (16) and the robot arm.

10. Apparatus according to any preceding claim, in which the sensor apparatus (16) is further arranged to determine a distance between the udder of the animal and one of the sensor apparatus (16) and the robot arm.

11. Apparatus according to any preceding claim, in which the sensor apparatus (16) is arranged to determine the location of the at least one anatomical feature in relation to the sensor apparatus (16).

12. Apparatus according to any preceding claim, in which the robot arm is arranged to move in dependence on a location of the robot arm in relation to the sensor apparatus (16).

13. Apparatus according.to claim 1, in which the processing apparatus (18) is arranged to define initial (40) and searching regions (42) in the acquired image.

14. Apparatus according to claim 13, in which the initial region (40) is smaller than the searching region (42) and the initial region (40) is wholly contained within the searching region (42).

15. Apparatus according to any one of claims 11 to 14, in which the processing apparatus (18) is arranged to define an initial region (40) in an acquired image, the initial region (40) lacking electronic data corresponding to a part of the animal.

16. Apparatus according to claim 15, in which the processing apparatus (18) is arranged to determine whether or not the initial region (40) is clear.

17. Apparatus according to claim 1, in which the processing apparatus (18) is arranged to carry out a search from a first part of the searching region (42) towards a second part of the searching region (42), the first part corresponding to a lower part of a view of the image capture apparatus (16) and the second part corresponding to an upper part of the view of the image capture apparatus (16).

18. Apparatus according to claim 17, in which the processing apparatus (18) is arranged to determine a representation of at least part of at least one leg in the searching region (42) as the search progresses from the first to the second part.

19. Apparatus according to claim 18, in which the processing apparatus (18) is arranged to determine a representation of at least part of an udder in the searching region (42) after determination of the representation of at least part of at least one leg as the search progresses further from the first to the second part.

20. Apparatus according to any preceding claim, further comprising at least one stall (20) configured to accommodate an animal and to maintain the animal in a predetermined orientation in relation to the stall (20), at least one of the robot arm and the sensor apparatus (16) being disposed in relation to the stall (20) such that the at least one of the robot arm and the sensor apparatus (16) is either behind or in front of the animal.

21. Apparatus according to any preceding claim, in which the robot arm is configured and is further arranged to perform at least one of: pre-milking teat disinfection; pre-milking teat cleaning; teat cup attachment; and post-milking teat disinfection.

22. Apparatus according to any preceding claim, further comprising a teat locating sensor, the robot arm being arranged to perform at least one of pre-milking teat disinfection, pre-milking teat cleaning, teat cup attachment and post-milking teat disinfection, in dependence upon operation of the image capture apparatus (16) and after movement of the robot arm towards the udder.

23. Apparatus according to any preceding claim, further comprising a rotary milking parlour.

24. A milking process comprising:
determining a location in a lateral direction with respect to an animal in a milking apparatus of an anatomical feature of the animal by means of sensor apparatus (16) and a processing apparatus (18), the anatomical feature being other than an udder of the animal, the sensor apparatus (16) comprising image capture apparatus (16) that is arranged to acquire at least one image of at least part of the animal, and
operating a robot arm located either behind or in front of the animal such that the robot arm moves towards the udder in dependence upon the determined location of the anatomical feature,
wherein the processing apparatus (18) is arranged to
process the at least one image acquired by the image capture apparatus,
**characterised in that** the processing apparatus (18) is arranged to
define a searching region (42) in the acquired image and
to carry out a search within the searching region (42) for electronic data corresponding to a part of the animal, said search comprising search from substantially a centre of the searching region (42) towards a periphery of the searching region (42).

## Patentansprüche

1. Eine Melkvorrichtung, die Folgendes beinhaltet:
eine Sensorvorrichtung (16), die derart angeordnet ist, um bei der Verwendung der Melkvorrichtung eine Position in einer lateralen Richtung in Bezug auf ein Tier von mindestens einem anatomischen Merkmal des Tieres zu bestimmen, wobei das mindestens eine anatomische Merkmal nicht ein Euter des Tieres ist, wobei die Sensorvorrichtung (16) eine Bildaufnahmevorrichtung (16) beinhaltet, die derart angeordnet ist, um mindestens ein Bild von mindestens einem Teil des Tieres zu erfassen; und
einen Roboterarm, der sich bei der Verwendung der Melkvorrichtung entweder hinter oder vor dem Tier befindet, wobei der Roboterarm derart angeordnet ist, um sich in Abhängigkeit von der bestimmten Position des anatomischen Merkmals zu dem Euter hin zu bewegen, wobei
die Melkvorrichtung eine Verarbeitungsvorrichtung (18) beinhaltet, die derart angeordnet ist, um das mindestens eine von der Bildaufnahmevorrichtung (16) erfasste Bild zu verarbeiten, **dadurch gekennzeichnet, dass** die Verarbeitungsvorrichtung (18) derart angeordnet ist, um einen Suchbereich (42) in dem erfassten Bild zu definieren und um innerhalb des Suchbereichs (42) eine Suche nach elektronischen Daten,
welche einem Teil des Tieres entsprechen, durchzuführen, und wobei die Verarbeitungsvorrichtung (18) derart angeordnet ist, um von im Wesentlichen einem Zentrum des Suchbereichs (42) zu einer Peripherie des Suchbereichs (42) hin eine Suche durchzuführen.

2. Vorrichtung gemäß Anspruch 1, wobei die Bildaufnahmevorrichtung (16) derart angeordnet ist, um ein Bild in mindestens zwei Dimensionen zu erfassen.

3. Vorrichtung gemäß Anspruch 1 oder 2, wobei die Bildaufnahmevorrichtung (16) derart angeordnet ist, um ein Bild in drei Dimensionen zu erfassen.

4. Vorrichtung gemäß Anspruch 3, wobei die Bildaufnahmevorrichtung (16) eine TOF-Kamera beinhaltet.

5. Vorrichtung gemäß einem der vorhergehenden Ansprüche, wobei die Sensorvorrichtung (16) so konfiguriert ist, dass sie derart angeordnet ist, um die Position des anatomischen Merkmals zu bestimmen, ohne das Tier zu berühren.

6. Vorrichtung gemäß einem der vorhergehenden Ansprüche, wobei die Sensorvorrichtung (16) derart angeordnet ist, um die Position von mindestens einem Bein des Tieres in einer lateralen Richtung zu bestimmen.

7. Vorrichtung gemäß Anspruch 6, wobei die Sensorvorrichtung (16) derart angeordnet ist, um die Position von mindestens einem Bein in Beziehung zu einem von der Sensorvorrichtung (16) und dem Roboterarm zu bestimmen.

8. Vorrichtung gemäß einem der vorhergehenden Ansprüche, wobei die Sensorvorrichtung (16) derart angeordnet ist, um eine Trennung zwischen zwei Beinen des Tieres zu bestimmen.

9. Vorrichtung gemäß einem der vorhergehenden Ansprüche, wobei die Sensorvorrichtung (16) des Weiteren derart angeordnet ist, um eine Höhe des Euters des Tieres in Bezug auf die Sensorvorrichtung (16) und den Roboterarm zu bestimmen.

10. Vorrichtung gemäß einem der vorhergehenden Ansprüche, wobei die Sensorvorrichtung (16) des Weiteren derart angeordnet ist, um einen Abstand zwischen dem Euter des Tieres und einem von der Sensorvorrichtung (16) und dem Roboterarm zu bestimmen.

11. Vorrichtung gemäß einem der vorhergehenden Ansprüche, wobei die Sensorvorrichtung (16) derart angeordnet ist, um die Position des mindestens einen anatomischen Merkmals in Beziehung zu der Sensorvorrichtung (16) zu bestimmen.

12. Vorrichtung gemäß einem der vorhergehenden Ansprüche, wobei der Roboterarm derart angeordnet ist, um sich in Abhängigkeit von einer Position des Roboterarms in Bezug auf die Sensorvorrichtung (16) zu bewegen.

13. Vorrichtung gemäß Anspruch 1, wobei die Verarbeitungsvorrichtung (18) derart angeordnet ist, um anfängliche (40) und Suchbereiche (42) in dem erfassten Bild zu definieren.

14. Vorrichtung gemäß Anspruch 13, wobei der anfängliche Bereich (40) kleiner als der Suchbereich (42) ist und der anfängliche Bereich (40) vollständig innerhalb des Suchbereichs (42) enthalten ist.

15. Vorrichtung gemäß einem der Ansprüche 11 bis 14, wobei die Verarbeitungsvorrichtung (18) derart angeordnet ist, um einen anfänglichen Bereich (40) in einem erfassten Bild zu definieren, wobei es dem anfänglichen Bereich (40) an elektronischen Daten, welche einem Teil des Tieres entsprechen, fehlt.

16. Vorrichtung gemäß Anspruch 15, wobei die Verarbeitungsvorrichtung (18) derart angeordnet ist, um zu bestimmen, ob der anfängliche Bereich (40) frei ist oder nicht.

17. Vorrichtung gemäß Anspruch 1, wobei die Verarbeitungsvorrichtung (18) derart angeordnet ist, um eine Suche von einem ersten Teil des Suchbereichs (42) zu einem zweiten Teil des Suchbereichs (42) hin durchzuführen, wobei der erste Teil einem unteren Teil einer Ansicht der Bildaufnahmevorrichtung (16) entspricht und der zweite Teil einem oberen Teil der Ansicht der Bildaufnahmevorrichtung (16) entspricht.

18. Vorrichtung gemäß Anspruch 17, wobei die Verarbeitungsvorrichtung (18) derart angeordnet ist, um eine Darstellung von mindestens einem Teil von mindestens einem Bein in dem Suchbereich (42) zu bestimmen, während die Suche von dem ersten zu dem zweiten Teil weiterläuft.

19. Vorrichtung gemäß Anspruch 18, wobei die Verarbeitungsvorrichtung (18) derart angeordnet ist, um eine Darstellung von mindestens einem Teil eines Euters in dem Suchbereich (42) nach der Bestimmung der Darstellung von mindestens einem Teil von mindestens einem Bein zu bestimmen, während die Suche von dem ersten zu dem zweiten Teil weiterläuft.

20. Vorrichtung gemäß einem der vorhergehenden Ansprüche, die des Weiteren mindestens eine Box (20) beinhaltet, die derart konfiguriert ist, um ein Tier unterzubringen und um das Tier in einer vorbestimmten Ausrichtung in Beziehung zu der Box (20) zu halten, wobei mindestens eines von dem Roboterarm und der Sensorvorrichtung (16) in Beziehung zu der Box (20) eingerichtet ist/sind, so dass sich der mindestens eine bzw. die mindestens eine von dem Roboterarm und der Sensorvorrichtung (16) entweder hinter oder vor dem Tier befindet/befinden.

21. Vorrichtung gemäß einem der vorhergehenden Ansprüche, wobei der Roboterarm derart konfiguriert ist und des Weiteren derart angeordnet ist, um mindestens eines von Folgendem vorzunehmen: Desinfizieren der Zitzen vor dem Melken, Reinigen der Zitzen vor dem Melken, Anbringen des Melkbechers und Desinfizieren der Zitzen nach dem Melken.

22. Vorrichtung gemäß einem der vorhergehenden Ansprüche, die des Weiteren einen Zitzenortungssensor beinhaltet, wobei der Roboterarm derart angeordnet ist, um mindestens eines von Folgendem vorzunehmen: Desinfizieren der Zitzen vor dem Melken, Reinigen der Zitzen vor dem Melken, Anbringen des Melkbechers und Desinfizieren der Zitzen nach dem Melken, in Abhängigkeit von dem Betrieb der Bildaufnahmevorrichtung (16) und nach dem Bewegen des Roboterarms zu dem Euter hin.

23. Vorrichtung gemäß einem der vorhergehenden Ansprüche, die des Weiteren ein Melkkarussell beinhaltet.

24. Ein Melkverfahren, das Folgendes beinhaltet:
Bestimmen einer Position in einer lateralen Richtung in Bezug auf ein Tier in einer Melkvorrichtung von einem anatomischen Merkmal des Tieres mittels einer Sensorvorrichtung (16) und einer Verarbeitungsvorrichtung (18), wobei das anatomische Merkmal nicht ein Euter des Tieres ist, wobei die Sensorvorrichtung (16) eine Bildaufnahmevorrichtung (16) beinhaltet, die derart angeordnet ist, um mindestens ein Bild von mindestens einem Teil des Tieres zu erfassen, und
Betätigen eines Roboterarms, der sich entweder hinter oder vor dem Tier befindet, so dass sich der Roboterarm in Abhängigkeit von der bestimmten Position des anatomischen Merkmals zu dem Euter hin bewegt, wobei die Verarbeitungsvorrichtung (18) derart angeordnet ist, um das mindestens eine von der Bildaufnahmevorrichtung erfasste Bild zu verarbeiten, **dadurch gekennzeichnet,**
**dass** die Verarbeitungsvorrichtung (18) derart angeordnet ist, um in dem erfassten Bild einen Suchbereich (42) zu definieren und
innerhalb des Suchbereichs (42) eine Suche nach elektronischen Daten, welche einem Teil des Tieres entsprechen, durchzuführen, wobei die Suche das Suchen von im Wesentlichen einem Zentrum des Suchbereichs (42) zu einer Peripherie des Suchbereichs (42) hin beinhaltet.

## Revendications

1. Un appareil de traite comprenant :
un appareil capteur (16) arrangé, lors de l'utilisation de l'appareil de traite, afin de déterminer un emplacement dans une direction latérale par rapport à un animal d'au moins une caractéristique anatomique de l'animal, cette au moins une caractéristique anatomique étant autre qu'un pis de l'animal, l'appareil capteur (16) comprenant un appareil de capture d'image (16) qui est arrangé afin d'acquérir au moins une image d'au moins une partie de l'animal ; et
un bras robot placé, lors de l'utilisation de l'appareil de traite, soit derrière, soit devant l'animal, le bras robot étant arrangé afin de se déplacer vers le pis en fonction de l'emplacement déterminé de la caractéristique anatomique, où l'appareil de traite comprend un appareil de traitement (18) qui est arrangé afin de traiter l'au moins une image acquise par l'appareil de capture d'image (16), **caractérisé en ce que** l'appareil de traitement (18) est arrangé afin de définir une région de recherche (42) dans l'image acquise et afin d'effectuer une recherche au sein de la région de recherche (42) en quête de données électroniques correspondant à une partie de l'animal, et où
l'appareil de traitement (18) est arrangé afin d'effectuer une recherche depuis substantiellement un centre de la région de recherche (42) vers une périphérie de la région de recherche (42).

2. Appareil selon la revendication 1, dans lequel l'appareil de capture d'image (16) est arrangé afin d'acquérir une image dans au moins deux dimensions.

3. Appareil selon la revendication 1 ou la revendication 2, dans lequel l'appareil de capture d'image (16) est arrangé afin d'acquérir une image dans trois dimensions.

4. Appareil selon la revendication 3, dans lequel l'appareil de capture d'image (16) comprend une caméra à temps de vol.

5. Appareil selon n'importe quelle revendication précédente, dans lequel l'appareil capteur (16) est configuré de telle manière qu'il soit arrangé afin de déterminer l'emplacement de la caractéristique anatomique sans toucher l'animal.

6. Appareil selon n'importe quelle revendication précédente, dans lequel l'appareil capteur (16) est arrangé afin de déterminer l'emplacement d'au moins une patte de l'animal dans une direction latérale.

7. Appareil selon la revendication 6, dans lequel l'appareil capteur (16) est arrangé afin de déterminer l'emplacement d'au moins une patte par rapport à un élément parmi l'appareil capteur (16) et le bras robot.

8. Appareil selon n'importe quelle revendication précédente, dans lequel l'appareil capteur (16) est arrangé afin de déterminer un écart entre deux pattes de l'animal.

9. Appareil selon n'importe quelle revendication précédente, dans lequel l'appareil capteur (16) est arrangé en sus afin de déterminer une hauteur du pis de l'animal par rapport à l'appareil capteur (16) et au bras robot.

10. Appareil selon n'importe quelle revendication précédente, dans lequel l'appareil capteur (16) est arrangé en sus afin de déterminer une distance entre le pis de l'animal et un élément parmi l'appareil capteur (16) et le bras robot.

11. Appareil selon n'importe quelle revendication précédente, dans lequel l'appareil capteur (16) est arrangé afin de déterminer l'emplacement de l'au moins une caractéristique anatomique par rapport à l'appareil capteur (16).

12. Appareil selon n'importe quelle revendication précédente, dans lequel le bras robot est arrangé afin de se déplacer en fonction d'un emplacement du bras robot par rapport à l'appareil capteur (16).

13. Appareil selon la revendication 1, dans lequel l'appareil de traitement (18) est arrangé afin de définir des régions initiale (40) et de recherche (42) dans l'image acquise.

14. Appareil selon la revendication 13, dans lequel la région initiale (40) est plus petite que la région de recherche (42) et la région initiale (40) est entièrement contenue au sein de la région de recherche (42).

15. Appareil selon l'une quelconque des revendications 11 à 14, dans lequel l'appareil de traitement (18) est arrangé afin de définir une région initiale (40) dans une image acquise, la région initiale (40) ne renfermant pas de données électroniques correspondant à une partie de l'animal.

16. Appareil selon la revendication 15, dans lequel l'appareil de traitement (18) est arrangé afin de déterminer si la région initiale (40) est vide ou non.

17. Appareil selon la revendication 1, dans lequel l'appareil de traitement (18) est arrangé afin d'effectuer une recherche depuis une première partie de la région de recherche (42) vers une deuxième partie de la région de recherche (42), la première partie correspondant à une partie inférieure d'une vue de l'appareil de capture d'image (16) et la deuxième partie correspondant à une partie supérieure de la vue de l'appareil de capture d'image (16).

18. Appareil selon la revendication 17, dans lequel l'appareil de traitement (18) est arrangé afin de déterminer une représentation d'au moins une partie d'au moins une patte dans la région de recherche (42) à mesure que la recherche progresse de la première à la deuxième partie.

19. Appareil selon la revendication 18, dans lequel l'appareil de traitement (18) est arrangé afin de déterminer une représentation d'au moins une partie d'un pis dans la région de recherche (42) après détermination de la représentation d'au moins une partie d'au moins une patte à mesure que la recherche progresse plus avant de la première à la deuxième partie.

20. Appareil selon n'importe quelle revendication précédente, comprenant en sus au moins une stalle (20) configurée afin d'accueillir un animal et afin de maintenir l'animal dans une orientation prédéterminée par rapport à la stalle (20), au moins un élément parmi le bras robot et l'appareil capteur (16) étant disposé par rapport à la stalle (20) de telle manière que cet au moins un élément parmi le bras robot et l'appareil capteur (16) se trouve soit derrière, soit devant l'animal.

21. Appareil selon n'importe quelle revendication précédente, dans lequel le bras robot est configuré et est arrangé en sus afin de réaliser au moins un acte parmi : la désinfection des trayons préalablement à la traite ; le nettoyage des trayons préalablement à la traite ; la fixation des gobelets-trayeurs ; et la désinfection des trayons postérieurement à la traite.

22. Appareil selon n'importe quelle revendication précédente, comprenant en sus un capteur de localisation des trayons, le bras robot étant arrangé afin de réaliser au moins un acte parmi la désinfection des trayons préalablement à la traite, le nettoyage des trayons préalablement à la traite, la fixation des gobelets-trayeurs et la désinfection des trayons postérieurement à la traite, en fonction de l'opération de l'appareil de capture d'image (16) et après déplacement du bras robot vers le pis.

23. Appareil selon n'importe quelle revendication précédente, comprenant en sus une salle de traite rotative.

24. Un procédé de traite comprenant :
la détermination d'un emplacement dans une direction latérale par rapport à un animal dans un appareil de traite d'une caractéristique anatomique de l'animal au moyen de l'appareil capteur (16) et d'un appareil de traitement (18), cette caractéristique anatomique étant autre qu'un pis de l'animal, l'appareil capteur (16) comprenant un appareil de capture d'image (16) qui est arrangé afin d'acquérir au moins une image d'au moins une partie de l'animal, et
l'opération d'un bras robot placé soit derrière, soit devant l'animal de telle sorte que le bras robot se déplace vers le pis en fonction de l'emplacement déterminé de la caractéristique anatomique,
où l'appareil de traitement (18) est arrangé afin de traiter l'au moins une image acquise par l'appareil de capture d'image, **caractérisé en ce que** l'appareil de traitement (18) est arrangé afin de définir une région de recherche (42) dans l'image acquise et
afin d'effectuer une recherche au sein de la région de recherche (42) en quête de données électroniques correspondant à une partie de l'animal, ladite recherche comprenant une recherche depuis substantiellement un centre de la région de recherche (42) vers une périphérie de la région de recherche (42).
